Europäisches Patentamt

European Patent Office

Office européen des brevets

(11) Veröffentlichungsnummer: **0 054 254 B1**

(12) **EUROPÄISCHE PATENTSCHRIFT**

(51) Int. Cl.³: **A 01 B 1/02**

(45) Veröffentlichungstag der Patentschrift:
24.10.84

(21) Anmeldenummer: **81110281.3**

(22) Anmeldetag: **09.12.81**

㊸ Spaten.

(30) Priorität: **11.12.80 AT 6029/80**

(43) Veröffentlichungstag der Anmeldung:
**23.06.82 Patentblatt 82/25**

(45) Bekanntmachung des Hinweises auf die Patenterteilung:
**24.10.84 Patentblatt 84/43**

(84) Benannte Vertragsstaaten:
**BE CH DE FR GB IT LI LU NL SE**

(56) Entgegenhaltungen:
**CH - A - 181 280**
**CH - A - 193 111**
**CH - A - 216 478**
**DE - A - 2 242 979**
**DE - B - 1 054 878**
**DE - U - 1 737 615**

(73) Patentinhaber: **Glock, Gaston,**
**Siebenbürgerstrasse 16-26, A-1220 Wien (AT)**

(72) Erfinder: **Glock, Gaston, Siebenbürgerstrasse 16-26,**
**A-1220 Wien (AT)**

(74) Vertreter: **Barger, Erich, Dipl.-Ing. Patentanwälte**
**Dipl.-Ing. H. Mitscherlich et al, Dipl.-Ing. K. Gunschmann**
**Dr.rer.nat. Körber Dipl.-Ing. J. Schmidt-Evers**
**Steinsdorfstrasse 10, D-8000 München 22 (DE)**

ACTORUM AG

## Beschreibung

Die Erfindung bezieht sich auf einen Spaten mit schwenkbarem und in unterschiedlichen Stellungen festlegbar am vorzugsweise hohlen Stiel mittels eines Lagerzapfens angelenkten Blatt. Bei der bekannten Ausführungsform eines solchen Spatens bilden das untere Ende des Stieles, zwei senkrecht zum Spatenblatt aufgebogene Lappen desselben und ein Lagerzapfen ein Gelenk. Der Stiel trägt eine Mutter, die gegen die Lappen des Spatenblattes bewegbar ist. Die Lappen weisen mehrere, zum Lagerzapfen parallele Flächen auf, wobei benachbarte Flächen einen stumpfen Winkel miteinander einschliessen. Durch Lösen der Mutter ist es möglich, das Blatt zu verschwenken und in der gewünschten Richtung zum Stiel wieder anzuziehen, so dass der Spaten in der eingestellten Lage fixiert wird. Diese Bauart hat den Nachteil, dass das Gewinde offenliegt und daher Beschädigungen und einer Verschmutzung ausgesetzt ist, was die Beweglichkeit der Mutter beeinträchtigen oder beseitigen kann. Ausserdem besteht ein hoher Laibungsdruck zwischen den Flächen an den Lappen des Blattes und der Mutter, so dass sich hier sehr bald Abnützungen ergeben, die den Spaten zunehmend unbrauchbar machen.

Die Erfindung bezweckt die Schaffung eines Spatens, bei dem diese Nachteile vermieden sind und der sich vorzugsweise auf ein kleines Volumen zusammenfalten lässt.

Erfindungsgemäss wird dies dadurch erreicht, dass der Stiel an seinem dem Blatt zugewendeten Ende mehrere, parallel zum Lagerzapfen verlaufende Flächen aufweist, wobei benachbarte Flächen einen stumpfen Winkel miteinander einschliessen und der Lagerzapfen als Exzenter ausgebildet ist, durch dessen Verdrehen mittels eines drehsicher mit ihm verbundenen Betätigungselementes das Spatenblatt gegen jeweils eine dieser ebenen Flächen des Stielendes anpressbar ist. Die Erfindung bezieht sich weiters auf vorteilhafte Ausgestaltungen.

In der Zeichnung ist der Gegenstand der Erfindung in einer beispielsweisen Ausführungsform dargestellt. Es zeigen:

Fig. 1 eine Seitenansicht des erfindungsgemässen Spatens,

Fig. 2 einen Schnitt nach der Linie II-II in Fig. 1,

Fig. 3 die Ansicht des als Exzenter ausgebildeten Lagerzapfens,

Fig. 4 eine Stirnansicht desselben, und

Fig. 5 einen vergrösserten Querschnitt des etwa U-förmigen Abschnittes des Betätigungsarmes für den Exzenter.

Der in seiner Gesamtheit mit 1 bezeichnete Spatenstiel ist zweiteilig ausgeführt und besteht aus zwei teleskopartig ineinandergesteckten Rohren 2, 3, von denen der äussere Spatenteil 2 an seinem freien Ende mit einem Innengewinde 4 und der innere Spatenteil 3 an seinem inneren Ende mit einem Aussengewinde 5 versehen ist, so dass die beiden Stielteile mittels der Gewinde 4, 5 von innen her verschraubbar sind. Das Innengewinde 4 und/oder das Aussengewinde 5 weisen einen kegelförmigen Endbereich auf, so dass sich das Gewinde gegen Ende des Schraubvorganges festzieht und ein Lockern durch einen Schlag auf den Stiel 1 nicht eintritt. Zur Sicherung der Lage des inneren Stielteiles 3 in seiner eingezogenen Lage sind am Boden 6 des äusseren Stielteiles 2 federnde Haken 7 vorgesehen, die in Ausnehmungen 8 des inneren Spatenteiles 3 einrasten können. Der rohrförmige innere Spatenteil 3 ist nach aussen verschlossen oder, wie im dargestellten Falle, mittels einer Schraubkappe 9 verschliessbar und kann zur Aufnahme eines weiteren Werkzeuges 10 dienen, das z.B. ein Sägeblatt ist, dessen freies Ende zu einem Schraubenzieher 11 ausgebildet ist. Zum Einbringen des Stielteiles 3 ist es erforderlich, den Stielteil 2 aus einem Rohr herzustellen, in das der Boden 6 stopfenartig eingesetzt ist. Die Verbindung zum Boden und Rohr kann durch Kleben herbeigeführt werden.

Das mit dem Spatenblatt 12 verbundene Ende 13 des Stieles weist seitliche ebene Flächen 14 auf, die von Lappen 15 des Blattes 12 umfasst werden. Senkrecht zu diesen ebenen Flächen 14 ist ein Lagerzapfen 16 angeordnet, der als Exzenter ausgebildet ist. Er ragt auf einer Seite aus dem Lager hervor und weist auf diesem Abschnitt einen von der Kreisform abweichenden Abschnitt auf. Auf diesem Abschnitt sitzt der Betätigungsarm 17.

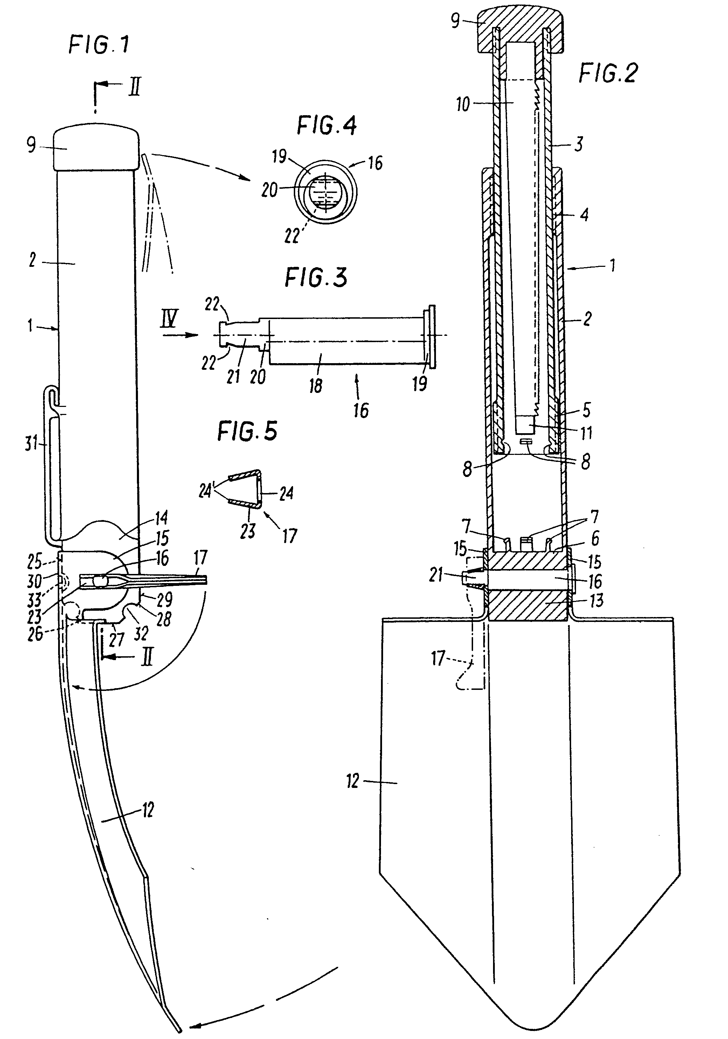

Der Lagerzapfen 16 ist mittels seines mittleren Bereiches 18 im Ende 13 des Stieles 1 gelagert und weist beiderseits schmale Abschnitte 19, 20 auf, die ebenfalls zylindrisch ausgebildet sind, deren gemeinsame Achse jedoch gegenüber der Achse des mittleren Abschnittes 18 versetzt ist. Um das Durchstecken des Lagerzapfens von einer Seite aus zu gestatten, weist der Abschnitt 19 einen grösseren Durchmesser und der Abschnitt 20 einen kleineren Durchmesser als der mittlere Abschnitt 18 auf. An den kleineren Abschnitt 20 schliesst sich ein aus dem Lager herausragender Abschnitt 21 an, der, wie Fig. 4 zeigt, zwei parallele Ebenen aufweist und mit Nuten 22 im Bereich seines freien Endes versehen ist.

Der Betätigungsarm 17, der durch einen Drehgriff ersetzt sein kann, wird aus einem Blechzuschnitt gefertigt und mit einem Abschnitt 23 versehen, der in Fig. 5 im Querschnitt dargestellt ist. Die Öffnung 24 ist dem Querschnitt des Abschnittes 21 des Lagerzapfens angepasst, so dass der Betätigungsarm drehsicher am Lagerzapfen sitzt. Beim Aufstecken des Armes 17 rasten die Ränder 24' in die Nuten 22 ein. Auf diese Weise werden besondere Befestigungsorgane vermieden.

Das Ende 13 des Stieles 1 ist mit ebenen Flächen 25, 26, 27, 28 und 29 versehen, die parallel zum Lagerzapfen 16 verlaufen. Mittels des als Exzenter ausgebildeten Lagerzapfens 16 kann nun der zwischen den Lappen 15 befindliche Bereich 30 des Blattes 12 gegen eine dieser Flächen gezogen werden, so dass der Spaten in der eingestellten Lage fixiert wird. Um eine Beschädigung des Spatens zu vermeiden, können die Abmessungen so gewählt sein, dass bei Auftreten eines grossen Drehmomentes der Stiel 1 verschwenkbar ist und auf einer benachbarten Fläche einrastet. Soll dies verhindert oder erschwert werden, so können in den Flächen 25 bis 29 Rillen 32 und am Spatenblatt 12 eine Sicke 33 vorgesehen werden. Die Flächen 25 bis 29 können aber auch konkav und das Spatenblatt 12 zwischen den Lappen 15 konvex ausgebildet sein.

Der Stielteil 2 weist eine Länge auf, die etwa der des Blattes 12 entspricht. Auf diese Weise kommt die Blattspitze im zusammengeklappten Zustand etwa in dem Bereich der Schraubkappe 9 zu liegen, wie dies in Fig. 1 strichpunktiert angedeutet ist. Der Stielteil 2 ist weiters mit einer Öse 31 versehen, die die lösbare Befestigung des Spatens am Gürtel zulässt.

Die Vorteile des erfindungsgemässen Spatens liegen auf der Hand. Alle beweglichen Teile sind gegen Verschmutzung geschützt. Im zusammengeklappten Zustand nimmt der Spaten nur einen geringen Raum ein. Die Exzenterausbildung und die breitflächige Berührung zwischen Spatenabschnitt 30 und den Flächen 25 bis 29 sichern eine minimale Abnützung und daher eine lange Gebrauchsdauer des Spatens. Der Spaten besteht nur aus wenigen Teilen und ist billig herzustellen und einfach zu handhaben.

## Patentansprüche

1. Spaten mit schwenkbarem und in unterschiedlichen Stellungen festlegbar am vorzugsweise hohlen Stiel (1) mittels eines Lagerzapfens (16) angelenkten Blatt (12), dadurch gekennzeichnet, dass der Stiel (1) an seinem dem Blatt (12) zugewendeten Ende (13) mehrere, parallel zum Lagerzapfen (16) verlaufende Flächen (25 bis 29) aufweist, wobei benachbarte Flächen einen stumpfen Winkel miteinander einschliessen, und der Lagerzapfen als Exzenter (18, 19, 20) ausgebildet ist, durch dessen Verdrehen mittels eines drehsicher mit ihm verbundenen Betätigungselementes, wie Arm (17), Drehscheibe oder dergleichen, das Spatenblatt gegen jeweils eine dieser Flächen anpressbar ist.

2. Spaten nach Anspruch 1, dadurch gekennzeichnet, dass das dem Spatenblatt (12) zugewendete Ende (13) des Stieles (1) seitliche, senkrecht zum Lagerzapfen (16) verlaufende ebene Flächen (14) aufweist und dieses Stielende von zwei aufgestellten Lappen (15) des Blattes umfasst ist.

3. Spaten nach einem der Ansprüche 1 oder 2, dadurch gekennzeichnet, dass die zum Lagerzapfen (16) parallel verlaufenden Flächen (25 bis 29) eben sind.

4. Spaten nach den Ansprüchen 2 und 3, dadurch gekennzeichnet, dass die Flächen (25 bis 29) parallel zum Lagerzapfen (16) verlaufende Rinnen (32) aufweisen, in die eine Sicke (33) zwischen den Lappen (15) des Spatenblattes (12) einrastet.

5. Spaten nach Anspruch 2, dadurch gekennzeichnet, dass die Flächen (25 bis 29) konkav und das Spatenblatt (12) zwischen den Lappen (15) entsprechend konvex ausgebildet sind.

6. Spaten nach einem der Ansprüche 1 bis 5, dadurch gekennzeichnet, dass der Stiel (1) aus zwei teleskopartig ineinandergesteckten Teilen (2, 3) besteht und die Länge des äusseren Stielteiles (2) etwa der Länge des Spatenblattes (12) entspricht.

7. Spaten nach Anspruch 6, dadurch gekennzeichnet, dass der äussere Stielteil (2) am freien Ende ein Innengewinde (4) und der innere, ausziehbare Stielteil (3) am inneren Ende ein Aussengewinde (5) trägt und die beiden Stielteile (2, 3) von innen her miteinander verschraubbar sind.

8. Spaten nach Anspruch 7, dadurch gekennzeichnet, dass das Aussengewinde (5) und/oder das Innengewinde (4) wenigstens im Endbereich leicht kegelig ausgebildet sind.

9. Spaten nach einem der Ansprüche 6, 7 oder 8, dadurch gekennzeichnet, dass der Boden (6) des äusseren Stielteiles (2) federnde Haken (7) oder dergleichen aufweist, die in Ausnehmungen (8) oder dergleichen des inneren Stielteiles (3) lösbar einrasten.

10. Spaten nach einem der Ansprüche 6 bis 9, dadurch gekennzeichnet, dass der innere Stielteil (3) aus einem am freien Ende verschliessbaren Rohr besteht und vorzugsweise zur Aufnahme eines weiteren Werkzeuges, wie Säge (10), Schraubenzieher (11) oder dergleichen, dient.

11. Spaten nach einem der Ansprüche 1 bis 10, dadurch gekennzeichnet, dass der Spatenstiel eine Tragöse (31) aufweist.

12. Spaten nach einem der Ansprüche 1 bis 11, dadurch gekennzeichnet, dass der als Exzenter ausgebildete Lagerzapfen (16) an einer Seite aus dem Lager herausragt und in diesem Abschnitt einen unrunden Querschnitt und eine oder mehrere Umfangsnuten (22) aufweist, in die der Betätigungsarm (17) des Exzenters mit den Randkanten (24') seines etwa U-förmigen Abschnittes (23) einrastet.

## Claims

1. A spade having a pivotable blade (12) which is hinge-attached to the preferably hollow shaft (1) by means of a pivot pin (16) so as to be able to be set in different positions, characterized in that at its end (13) facing towards the blade (12) the shaft (1) has a plurality of surfaces (25 to 29) which extend parallel to the pivot pin (16), where adjacent surfaces form an obtuse angle with one another and the pivot pin is designed as an eccentric (18, 19, 20) which, when rotated by means of an actuating element such as an arm (17), rotary disc or the like to which it is connected so as to be locked in rotation, causes the blade of the spade to be able to be pressed against one of these surfaces.

2. A spade as claimed in Claim 1, characterized in that the end (13) of the shaft (1) which faces towards the spade blade (12) has lateral, flat surfaces (14) which run at right angles to the pivot pin (16) and this end of the shaft is gripped by two flanges (15) applied to the blade.

3. A spade as claimed in Claim 1 or 2, characterized in that the surfaces (25 to 29) which run parallel to the pivot pin (16) are flat.

4. A spade as claimed in Claims 2 and 3, characterized in that the surfaces (25 to 29) have channels (32) which run parallel to the pivot pin (16) and into which a bead (33) engages between the flanges (15) of the spade blade (12).

5. A spade as claimed in Claim 2, characterized in that the surfaces (25 to 29) are concave and the spade blade (12) is designed to be correspondingly convex between the flanges (15).

6. A spade as claimed in one of the Claims 1 to 5, characterized in that the shaft (1) comprises two components (2, 3) which fit telescopically into one another, and the lenght of the outer shaft component (2) corresponds approximately to the length of the spade blade (12).

7. A spade as claimed in Claim 6, characterized in that the outer shaft component (2) bears an inner thread (4) at the free end, and the inner shaft component (3) which can be drawn out bears an outer thread (5) at the inner end, and the two shaft components (2, 3) can be screwed to one another internally.

8. A spade as claimed in Claim 7, characterized in that the outer thread (5) and/or the inner thread (4) are designed to be slightly conical at least in the end zone.

9. A spade as claimed in Claim 6, 7 or 8, characterized in that the base (6) of the outer shaft component (2) has spring-like hooks (7) or the like which engage in detachable fashion in recesses (8) or the like in the inner shaft component (3).

10. A spade as claimed in one of the Claims 6 to 9, characterized in that the inner shaft component (3) comprises a tube which can be closed at its free end and preferably serves to accommodate a further tool, such as a saw (10), screwdriver (11) or the like.

11. A spade as claimed in one of the Claims 1 to 10, characterized in that the spade shaft has a bearing lug (31).

12. A spade as claimed in one of the Claims 1 to 11, characterized in that the pivot pin (16), which is designed as an eccentric, projects on one side from the bearing and in this portion has a non-circular cross-section and has one or more than one peripheral groove (22) into which the actuating arm (17) of the eccentric engages with the edges (24') of its approximately U-shaped section (23).

## Revendications

1. Bêche comprenant une lame (12) articulée, au moyen d'un tourillon (16), au manche (1) qui, de préférence, est creux, de manière à pouvoir être fixée en des positions différentes, caractérisée en ce que le manche (1) présente, à son extrémité (13) située du côté de la lame (12), plusieurs surfaces (25 à 29) s'étendant parallèlement au tourillon (16), des surfaces voisines formant entre elles un angle obtus, et le tourillon est agencé en excentrique (18, 19, 20), dont la rotation, au moyen d'un élément de manœuvre, tel qu'un bras (17), une plaque tournante ou élément semblable dont il est solidaire en rotation, permet de pousser la lame de bêche contre l'une de ces surfaces.

2. Bêche suivant la revendication 1, caractérisée en ce que l'extrémité (13) du manche située du côté de la lame (12) de bêche présente des surfaces (14) planes, latérales, s'étendant perpendiculairement au tourillon (16), et cette extrémité du manche est enserrée par deux pattes (15) relevées de la lame.

3. Bêche suivant l'une des revendications 1 ou 2, caractérisée en ce que les surfaces (25 à 29) s'étendant parallèlement au tourillon (16) sont planes.

4. Bêche suivant les revendications 2 et 3, caractérisée en ce que les surfaces (25 à 29) présentent des gorges (32) qui s'étendent parallèlement au tourillon (16) et dans lesquelles une moulure (33) s'encliquette entre les pattes (15) de la lame de bêche (12).

5. Bêche suivant la revendication 2, caractérisée en ce que les surfaces (25 à 29) sont concaves et en ce que la lame de bêche (12) est, d'une manière correspondante, convexe entre les pattes (15).

6. Bêche suivant l'une des revendications 1 à 5, caractérisée en ce que le manche (1) est constitué de deux parties (2, 3) s'emmanchant télescopiquement et la longueur de la partie extérieure (2) du manche correspond à peu près à la longueur de la lame de bêche (12).

7. Bêche suivant la revendication 6, caractérisée en ce que la partie extérieure (2) du manche porte, à l'extrémité libre, un taraudage (4), et la partie (3) du manche qui peut être retirée porte, à l'extrémité intérieure, un filetage (5), et les deux parties (2, 3) de manche peuvent être vissées l'une à l'autre de l'intérieur.

8. Bêche suivant la revendication 7, caractérisée en ce que le filetage (5) et/ou le taraudage (4) sont agencés d'une manière légèrement conique, au moins dans la région d'extrémité.

9. Bêche suivant l'une des revendications 6, 7 ou 8, caractérisée en ce que le fond (6) de la partie extérieure (2) du manche présente des crochets élastiques (7) ou des éléments semblables qui peuvent s'encliqueter de manière détachable dans des évidements (8) ou dans des parties semblables de la partie intérieure (3) du manche.

10. Bêche suivant l'une des revendications 6 à 9, caractérisée en ce que la partie intérieure (3) du manche est constituée d'un tube pouvant être fermé à l'extrémité libre et sert, de préférence, à recevoir un autre outil comme une scie (10), un tournevis (11) ou un outil semblable.

11. Bêche suivant l'une des revendications 1 à 10, caractérisée en ce que le manche de bêche présente une anse (31) permettant de le porter.

12. Bêche suivant l'une des revendications 1 à 11, caractérisée en ce que le tourillon (16) agencé en excentrique fait saillie d'un côté du palier et présente, dans ce tronçon, une section transversale qui n'est pas ronde et une ou plusieurs gorges de pourtour (22) dans lesquelles le bras de manœuvre (17) de l'excentrique s'encliquette par les arêtes marginales (24') de son tronçon (23) sensiblement en forme de U.

FIG.1

FIG.2

FIG.4

FIG.3

FIG.5